# EUROPEAN PATENT APPLICATION

(11) **EP 4 206 832 A1**
(43) Date of publication of application: **05.07.2023**
(21) Application number: 21860098.9
(22) Date of filing: 05.08.2021
(51) Int. Cl.: G05B 15/02

(54) **CONTROL METHOD AND APPARATUS FOR INTERNET OF THINGS DEVICE, AND DEVICE AND STORAGE MEDIUM**

(30) Priority: 31.08.2020 CN 202010901601
(71) Applicant: GUANGDONG OPPO MOBILE TELECOMMUNICATIONS CORP., LTD., Dongguan, Guangdong 523860 (CN)
(72) Inventor: WU, Taiyue, Dongguan, Guangdong 523860 (CN); ZHAI, Zhaoxuan, Dongguan, Guangdong 523860 (CN); ZENG, Chunliang, Dongguan, Guangdong 523860 (CN); YU, Zhigang, Dongguan, Guangdong 523860 (CN); FENG, Tao, Dongguan, Guangdong 523860 (CN); CHEN, Zhao, Dongguan, Guangdong 523860 (CN); YANG, Qichang, Dongguan, Guangdong 523860 (CN)
(74) Representative: Ipside
(86) International application number: PCT/CN2021/110948
(87) International publication number: WO 2022/042258

(57) **Abstract**

A control method and apparatus for an Internet of Things device (120), and a device (110) and a storage medium, relating to the technical field of the Internet of Things. The method comprises: a control device (110) sends an operating command to an Internet of Things device (120), the operating command comprising a target siid, a target iid, and property parameters; and, on the basis of the operating command, the Internet of Things device (120) adjusts the property value of a target property. In the entire control process, the control device (110) and the Internet of Things device (120) only need to implement a single interaction, and the current property value of the Internet of Things device (120) does not need to be acquired, simplifying the interaction procedure during the process of the control device (110) controlling the Internet of Things device (120), and increasing the control efficiency of the Internet of Things device (120).

## Description

### CROSS-REFERENCE TO RELATED APPLICATIONS

The present disclosure claims priority of Chinese Patent Application No. 202010901601.5, titled "CONTROL METHOD AND APPARATUS OF INTERNET OF THINGS DEVICE, AND DEVICE AND STORAGE MEDIUM", filed on August 31, 2020, the contents of which are hereby incorporated by reference.

### TECHNICAL FIELD

The present disclosure relates to the field of Internet of Things technologies, and in particular, to a control method and a control apparatus of Internet of Things device, and a device and a storage medium.

### BACKGROUND

With continuous development of Internet of Things (IoT) technologies, a user can use a control device to control more and more IoT devices. For example, the user can control lights, curtains, air conditioners, or the like by using the control device.

In related technologies, the control process of the loT devices is essentially an idempotent operation on device properties, that is, multiple repeated executions have the same impact as a single execution. For example, for a table lamp, controlling the table lamp to be turned on actually sets a switch property value of the table lamp to ON. If a current state of the table lamp is on, the switch property value of the table lamp will not change when the table lamp is repeatedly turned on.

In addition, in related technologies, after receiving a control call (such as a voice instruction or a touch instruction) to the IoT device, the control device interacts with the loT device to obtain a current device state of the IoT device, and determines a target device state of the IoT device based on the control call and the current device state, and then sends an action call including the target device state to the IoT device, so that the IoT device can update the device state.

### SUMMARY

Some embodiments of the present disclosure provide a control method and a control apparatus of Internet of Things (IoT) device, and a device and storage medium. The technical schemes are as follows.

On the one hand, some embodiments of the present disclosure provide a control method of the IoT device. The method includes: a control device sending an action call to the IoT device, wherein the action call includes a target service instance identification (siid), a target instance identification (iid), and a property parameter; and the IoT device adjusting an attribute value of a target attribute according to the action call.

On the other hand, some embodiments of the present disclosure provide a control method of the IoT device. The method is for a control device, and the method includes: sending an action call to the IoT device, wherein the action call includes a target service instance identification (siid), a target instance identification (iid), and a property parameter.

On the other hand, some embodiments of the present disclosure provide a control method of the IoT device. The method is for the IoT device, and the method includes: receiving an action call sent by a control device, wherein the action call includes a target service instance identification (siid), a target instance identification (iid), and a property parameter; and adjusting a property value of a target property according to the action call.

On the other hand, some embodiments of the present disclosure provide a control apparatus of an IoT device. The control apparatus is for a control device and includes an action call sending module configured to send an action call to the IoT device. The action call includes a target service instance identification (siid), a target instance identification (iid), and a property parameter.

On the other hand, some embodiments of the present disclosure provide a control apparatus of an IoT device. The control apparatus is for the IoT device, and includes an action call receiving module and an adjustment module. The action call receiving module is configured to receive an action call sent by a control device, and the action call includes a target service instance identification (siid), a target instance identification (iid), and a property parameter. The adjustment module is configured to adjust an attribute value of a target attribute according to the action call.

On the other hand, some embodiments of the present disclosure provide a control device. The control device includes a processor and a memory. The memory stores at least one instruction. The at least one instruction is configured to be executed by the processor to realize the control method of the IoT device for the control device as described above.

On the other hand, some embodiments of the present disclosure provide an IoT device. The IoT device includes a processor and a memory. The memory stores at least one instruction. The at least one instruction is configured to be executed by the processor to realize the control method of the IoT device for the IoT device as described above.

On the other hand, some embodiments of the present disclosure provide a computer-readable storage medium. The storage medium stores at least one instruction, the at least one instruction is configured to be executed by a processor to realize the control method of the IoT device for the control device as described above, or the control method of the IoT device for the IoT device as described above.

On the other hand, some embodiments of the present disclosure provide a computer program product or a computer program. The computer program product or the computer program includes a computer instruction stored in a computer-readable storage medium. A processor of the computer device reads the computer instruction from the computer-readable storage medium, and the processor executes the computer instruction, causing the computer device to execute the control method of the IoT device provided in the above aspects.

### BRIEF DESCRIPTION OF THE DRAWINGS

FIG. 1 shows a schematic view of an implementation environment provided by an exemplary embodiment of the present disclosure.
FIG. 2 shows a flowchart of a control process of an IoT device.
FIG. 3 shows a flowchart of another control process of an IoT device.
FIG. 4 shows a schematic view of a functional hierarchy of an IoT device provided by an exemplary embodiment of the present disclosure.
FIG. 5 shows a flowchart of a control method of an IoT device provided by an exemplary embodiment of the present disclosure.
FIG. 6 is a flowchart of a control process of an IoT device provided by an exemplary embodiment of the present disclosure.
FIG. 7 is a flowchart of a control process of an IoT device provided by another exemplary embodiment of the present disclosure.
FIG. 8 shows a flowchart of a control method of an IoT device provided by another exemplary embodiment of the present disclosure.
FIG. 9 shows an implementation schematic view of a control method of an IoT device provided by an exemplary embodiment of the present disclosure.
FIG. 10 is a flowchart of a process of generating and sending an action call by a control device provided by an exemplary embodiment of the present disclosure.
FIG. 11 shows a structure block diagram of a control apparatus for an IoT device provided by an exemplary embodiment of the present disclosure.
FIG. 12 shows a structure block diagram of a control apparatus for an IoT device provided by an exemplary embodiment of the present disclosure.
FIG. 13 shows a structural block diagram of an electronic device provided by an exemplary embodiment of the present disclosure.

### DETAILED DESCRIPTION OF THE PREFERRED EMBODIMENTS

In order to make the purpose, technical solution and advantages of the present disclosure clearer, the present disclosure will be described more fully below with reference to the relevant drawings and embodiments.

In the description of the present disclosure, the terms "multiple" or "a plurality of" refers to two or more. The term "and/ or" describes the association relationship of the associated objects, indicating that there can be three relationships. For example, A and/ or B, can indicate the presence of A alone, B alone and both A and B at the same time. The symbol "*l*" generally indicates that the front and rear associated objects are an "or" relationship.

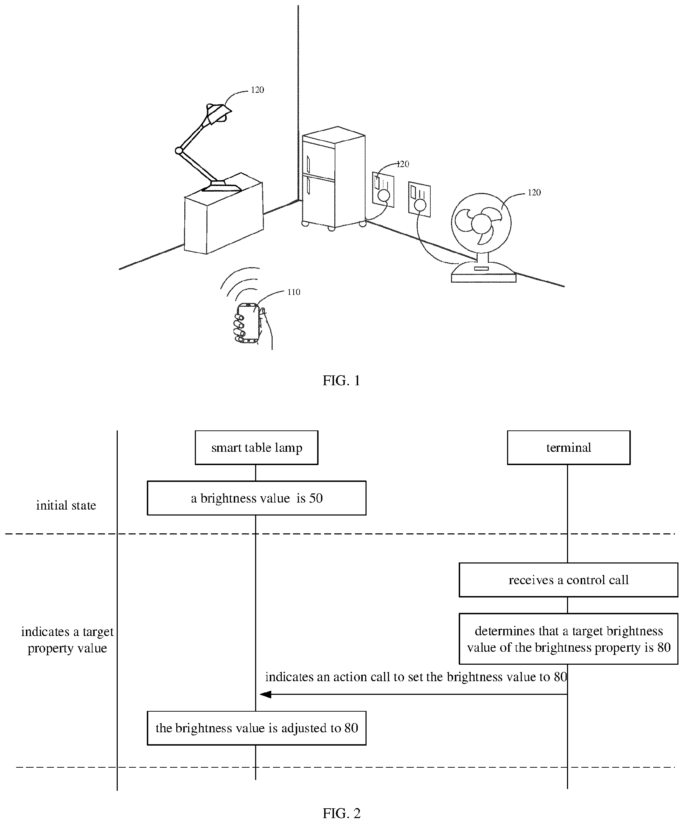

As shown in FIG. 1, FIG. 1 shows a schematic view of an implementation environment provided by an exemplary embodiment of the present disclosure. The implementation environment includes a control device 110 and an Internet of Things (IoT) device 120.

The control device 110 is an electronic device with control functions of the Internet of Things device, such as a smart phone, tablet computer, portable computer and other terminals, or an Internet of Things device with functions of controlling other IoT devices, such as a smart speaker. In FIG. 1, the control device 110 is illustrated as an example of a smart phone.

In some embodiments, the control device 110 controls the IoT device through an IoT device application. The IoT device application can control a plurality of IoT devices at the same time, or control a single IoT device (that is, each IoT device corresponds to an independent IoT device application).

The IoT device 120 may include a smart home device, a smart home appliance, a smart sensor, and the like. In FIG. 1, the IoT device 120 includes a smart table lamp, a smart socket and a smart fan. Embodiments of the present disclosure do not define the specific device type of the IoT device 120.

Optionally, the control device 110 can directly interact with the IoT device 120 for a data call. For example, the control device 110 can interact with the IoT device 120 for the data call through Bluetooth connection.

Optionally, the control device 110 can interact with the IoT device 120 for the data call through a transit device. The transit device can include a bridge, a route, a gateway, or the like. In a possible embodiment, the IoT device 120 is connected to a loT gateway (the IoT device and an IoT network are located in a same LAN), and the IoT gateway interacts with the control device 110 through an Internet for data instructions and forwards instructions sent by the control device 110 to a corresponding IoT device 120.

The IoT device is abstracted into a device model, and states or characteristics of the IoT device are abstractly described through device properties of the device models. For example, a smart table lamp is abstracted as a table lamp model. Device properties of the table lamp model include switch state properties and brightness value properties.

Correspondingly, when the control device controls the IoT device, the control device sends a property value setting call including a target property value to the IoT device by setting the property value, and the IoT device sets a device state of a corresponding hardware device according to the target property value in an action call.

As shown in FIG. 2, FIG. 2 shows a flowchart of a control process of an IoT device (taking a smart table lamp as an example).

In an initial state, a brightness value of the smart table lamp is 50. In the scene where a target property value is clearly indicated, a terminal determines that the brightness property of the smart table lamp needs to be adjusted to a target brightness value of 80 after receiving a control call, thereby sending an action call to the smart table lamp indicating that the brightness value is set to 80. The smart table lamp will adjust the brightness value from 50 to 80 after receiving the action call.

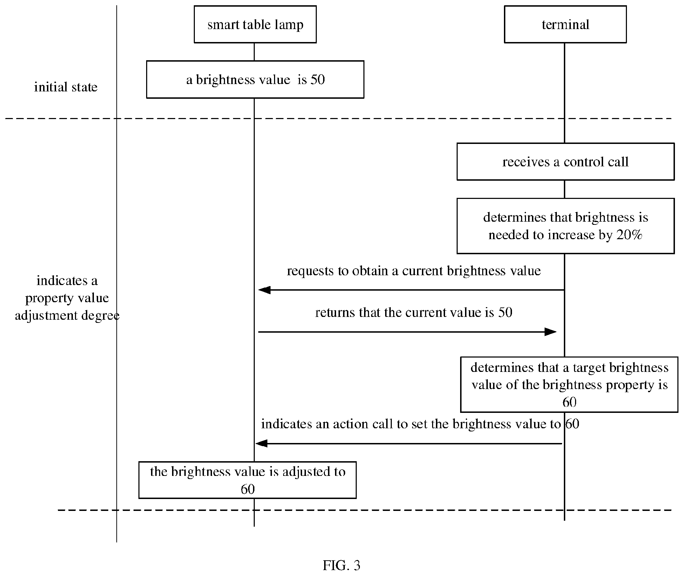

As shown in FIG. 3, in the scene where the target property value is not explicitly indicated but only a property value adjustment degree is indicated, the terminal determines that brightness of the smart table lamp needs to be increased by 20% after receiving the control call. In order to determine the target property value (i.e. the target brightness value) so that the action call can be sent subsequently, the terminal first requests to obtain a current brightness value of the smart table lamp, thereby determining that the target brightness value of the brightness property is 60 according to the current brightness value of 50 returned by the smart table lamp and the brightness increase amplitude of 20%, and then sends an action call indicating that the brightness value is set to 60 to the smart table lamp. The smart table lamp adjusts the brightness value from 50 to 60 after receiving the action call.

In the scene where the control call does not explicitly indicate the target property value (in most scenes, a user sending the control call often does not clearly specify the desired target property value), the control device and the IoT device need to interact additionally to obtain the current property value of the IoT device. In an actual application scene, the control device and the IoT device often need to interact through a cloud or a gateway, resulting in complex and inefficient control process of IoT device. It can be seen that the control of the IoT device is achieved by the way of setting the property value in relevant technologies, resulting in the high interaction cost between the control device and the IoT device and the low efficiency.

In the method provided by the embodiments of the present disclosure, in the scene where the control call does not explicitly indicate the target property value, the control device does not control the IoT device by setting the property value, but generates an action call indicating the IoT device to perform a property value adjustment operation based on a target service instance, a target property to be adjusted, and a property parameter indicating an adjustment process of the property value of the target property, and the IoT device adjusts the property value of the target property based on the property parameter. In the whole control process, the control device only needs to performed a single instruction interaction with the IoT device, thereby reducing the cost of instruction interaction in the control process and improving the control efficiency. The following describes the method provided by some embodiments of the present disclosure in detail.

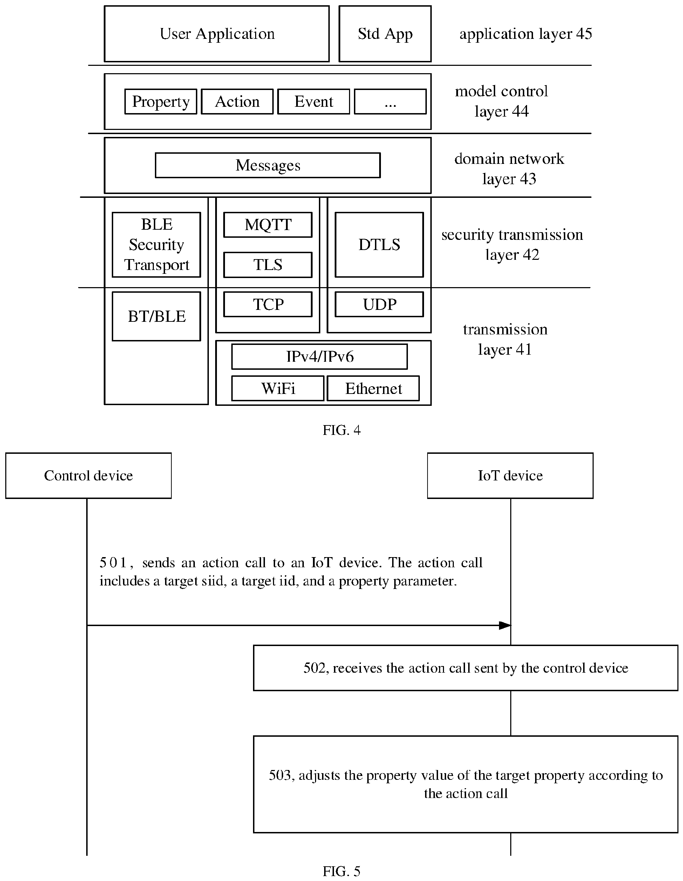

As shown in FIG. 4, FIG. 4 shows a schematic view of a functional hierarchy of an IoT device provided by an exemplary embodiment of the present disclosure. The IoT device can be functionally divided into a transmission layer 41, a security transmission layer 42, a domain network layer 43, a model control layer 44 and an application layer 45.

The transmission layer 41 is configured to connect the IoT device to a physical layer network, so that the IoT device can send and receive network data. As shown in FIG. 4, the IoT device can be connected to the physical layer network through Bluetooth (BT) or Bluetooth Low Energy (BLE), resulting in transmitting and receiving the network data through Bluetooth connection. The IoT device can also be connected to the physical layer network through Internet Protocol (IP) by means of Wireless Fidelity (WiFi), Ethernet, or the like.

The security transmission layer 42 is configured to ensure security of upper layer protocol data. Secure encryption protocols used by the security transmission layer 42 are different according to the protocol characteristics adopted by the transmission layer 41. As shown in FIG. 4, when the transmission layer 41 uses the Bluetooth for transmission, the security transmission layer 42 uses Bluetooth Low Energy Security Transport (BLE Security Transport) for data encryption transmission. When the transmission layer 41 uses Transmission Control Protocol (TCP) for network data transmission, the security transmission layer 42 uses Message Queuing Telemetry Transport (MQTT) and transmission layer Security (TLS) for data encryption transmission. When the transmission layer 41 uses User Datagram Protocol (UDP) for transmission, the security transmission layer 42 uses Datagram Transport Layer Security (DTLS) for data encryption transmission.

The domain network layer 43 is configured to distribute messages, and configured to distribute received messages to the model control layer 44, and a model module in the model control layer 44 process a corresponding message.

The model control layer 44 is configured to control of a service model, including model modification, synchronization of model data, and the like. As shown in FIG. 4, the model control layer 44 includes a property module, an action module, an event module, and the like. In some embodiments of the present disclosure, the IoT device executes the action call sent by the control device through the model control layer 44.

The application layer 45 is configured to implement an application logic, and includes a User Application and a Standard Application (Std App).

As shown in FIG. 5, FIG. 5 shows a flowchart of a control method of an IoT device provided by an exemplary embodiment of the present disclosure. The embodiment takes the method for the implementation environment shown in FIG. 1 as an example to explain, and the method includes operations at blocks illustrated herein.

At block 501, a control device sends an action call to an IoT device. The action call includes a target siid, a target iid, and a property parameter.

The siid is also called a service unique identifier, and is configured to uniquely identify a service instance. The IoT device corresponds to different service instances, and each service instance includes corresponding property instances. One IoT device can correspond to a plurality of services. In a schematic example, the table lamp can include an initial setting service instance, a lamp service instance, and the like. When a service instance indicated by the target siid is a lamp service instance, property instances in the lamp service instance include a brightness property, a switch property, a color temperature property, and the like.

In one possible embodiment, the property parameter is a parameter indicating an adjustment process of the property value corresponding to the target property, that is, a property parameter includes a series of parameters required by the IoT device to perform the adjustment process when the IoT device adjusts the target property to the target property value, rather than the target property value.

Optionally, the property parameter includes the property value adjustment amount and a property value adjustment way of the target property. The property value adjustment amount is configured to indicate the adjustment amount of the property value corresponding to the target property, and the property value adjustment way is configured to indicate an adjustment direction of the property value corresponding to the target property. For example, taking the target property as a brightness property, the property parameter includes the property value adjustment amount of 50, and the property value adjustment way of positive adjustment (that is, the brightness value is increased). Taking the target property as a switch property as an example, the property parameter includes the property value adjustment amount of 1, and the property value adjustment way of negative adjustment (that is, when the table lamp is currently on, the adjustment is off, and when the table lamp is currently off, the adjustment is on).

Optionally, the property parameter also includes at least one of a property value unit and a property value range of the target property. When the property value of the target property needs to meet a condition of a certain value range, the property parameter also includes the property value range, so that the IoT device can determine whether the adjusted property value of the target property is within the property value range.

At block 502, the IoT device receives the action call sent by the control device.

In one possible embodiment, the control device sends the action call to a IoT device gateway through the Internet, and the IoT device gateway forwards the action call to the corresponding IoT device.

At block 503, the IoT device adjusts the property value of the target property according to the action call.

In one possible embodiment, the loT device obtains a current property value of the target property according to the target siid and the target iid, thereby adjusting the property value of the target property according to a property parameter based on the current property value.

In the embodiments shown in FIG. 4, the control device sends the instruction (At block 501) to the IoT device through the domain network layer after the application layer information of the control device is analyzed in the model control layer. After the IoT device receives the instruction (At block 502) through the domain network layer, the domain network layer sends the instruction to the upper model control layer, and the application layer executes the instruction after the instruction is analyzed. The transmission process and the security of the process is guaranteed by the security transmission layer and the transmission layer.

In addition, after the domain network layer transmits the instruction (that is, when the transaction ends), the transaction is not marked as ended at the domain network layer, that is, request for retransmission is allowed to be processed repeatedly.

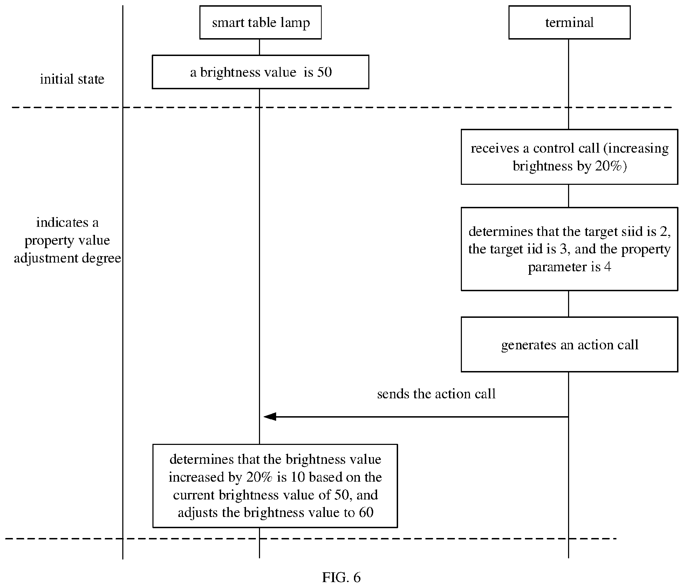

In a schematic example, as shown in FIG. 6, the brightness value of the smart table lamp is 50 in the initial state. After receiving a control call indicating to increase the brightness by 20%, the terminal determines that the target service instance is a lamp service instance (target siid=2), the target property to be adjusted is the brightness value (target iid=3), and the property parameter is 4 (indicating to increase by 20%), generates an action call including the target siid, the target iid, and the property parameter, and sends the action call to the intelligent table lamp. After receiving the action call, the smart table lamp analyzes the action call and determines that the brightness value increased by 20% is 10 based on the current brightness value of 50, thereby adjusting the brightness value from 50 to 60.

By comparing FIG. 4 and FIG. 3, it can be clearly seen that in the scene where the target property value is not explicitly indicated but only the property value adjustment degree is indicated, in the scheme provided by the embodiments of the present disclosure, the original property value setting call is replaced by the property value adjustment action call (i.e., the action call), and the IoT device performs the property value adjustment action based on the current property value. The control device can realize the control of the IoT device only by interacting with the IoT device once in the control process, thereby omitting the interaction process with the loT device before the instruction is sent, reducing the interaction cost of the control process, and improving the control efficiency of the IoT device.

In the method provided by the embodiments of the present disclosure, when the target property value to which the IoT device needs to be adjusted is not explicitly indicated, the control device does not interact with the IoT device to obtain the current property value of the IoT device, nor does the control device determine the target property value to which the IoT device needs to be adjusted according to the control call and the current property value, but sends the action call including the target siid, the target iid, and the property parameter to the IoT device, the IoT device adjusts the property value of the target iid according to the property parameter to control the IoT device. In the whole control process, the control device and the IoT device only need to interact for a single time, without obtaining the current property value of the IoT device, thereby simplifying the interaction process in the process of the control device controlling the IoT device, and improving the control efficiency of the IoT device.

Optionally, the property parameter includes the property value adjustment amount and property value adjustment way of the target property.

Optionally, the property parameter also includes at least one of the property value unit and the property value range of the target property.

Optionally, operations that the IoT device adjusts the property parameter of the target property according to the action call includes operations as below.

The IoT device obtains the current property value of the target property according to the target siid and the target iid.

The IoT device adjusts the property value of the target property according to the property parameter based on the current property value.

Optionally, after the IoT device adjusts the property parameter of the target property according to the action call, the method also includes operations as below.

The IoT device sends an action return to the control device.

The control device sends a transaction end request to the IoT device according to the action return.

The IoT device sends a transaction end response to the control device according to the transaction end request.

Optionally, before the control device sends the action call to the IoT device, the method also includes operations as below.

The control device receives the control call.

The control device determines a target function controlled by the control call and an adjustment target of the target function.

The control device determines the target siid and the target iid according to the target function.

The control device determines the property parameter according to the adjustment target.

The control device generates the action call according to the target siid, the target iid, and the property parameter.

Optionally, operations that the control device determines the target siid and the target iid according to the target function, includes operations as below.

The control device determines the property value adjustment amount, a property value adjustment unit corresponding to the property value adjustment amount, and a property value adjustment way corresponding to the property value adjustment amount as the property parameter in response to the adjustment target including the property value adjustment amount.

Or, the control device determines a property value adjustment amount corresponding to the property value adjustment degree according to a preset corresponding relationship in response to the adjustment target including the property value adjustment degree, wherein the preset corresponding relationship is the corresponding relationship between the adjustment degree of different property values and the adjustment amount of different property values; and determines the property value adjustment amount, the property value adjustment unit corresponding to the property value adjustment amount, and the property value adjustment way corresponding to the property value adjustment amount as the property parameter.

Optionally, when the adjustment target is to increase the property value, the property value adjustment way is positive adjustment.

When the adjustment target is to reduce the property value, the property value adjustment way is negative adjustment.

When the adjustment target is to invert the property value, the property value adjustment way is inversion adjustment, and the property value adjustment amount is inverted times.

Optionally, operations that the control device generates the action call according to the target siid, the target iid, and the property parameter, includes operations as below.

The control device obtains a historical property value corresponding to the target property.

The control device generates an action call according to the target siid, the target iid, and the property parameter in response to the historical property value being not stored or the stored historical property value being invalid.

Optionally, after the control device obtains the historical property value corresponding to the target property, the method also includes operations as below.

The control device determines the target property value according to the property parameter based on the historical property value in response to the historical property value being stored and the historical property values being valid.

The control device generates the property value setting call according to the target siid, the target iid, and the target property value.

The control device sends the property value setting call to the IoT device, and the IoT device is configured to set the current property value of the target property as the target property value.

In one possible embodiment, after the IoT device adjusts the property value of the target property according to the action call, the IoT device sends the action return to the control device, and the action return is configured to indicate whether the action call is correctly executed.

After the control device receives the action return, when the current transaction is needed to end (the control device creates the transaction when sending the action call), the control device sends the transaction end request (TransactionEndReq) to the IoT device according to the action return, and the IoT device sends the transaction end response to the control device according to the transaction end request, and marks that the current transaction has ended. For example, when the action return indicates that the action call is correctly executed, the control device sends the transaction end request to the IoT device.

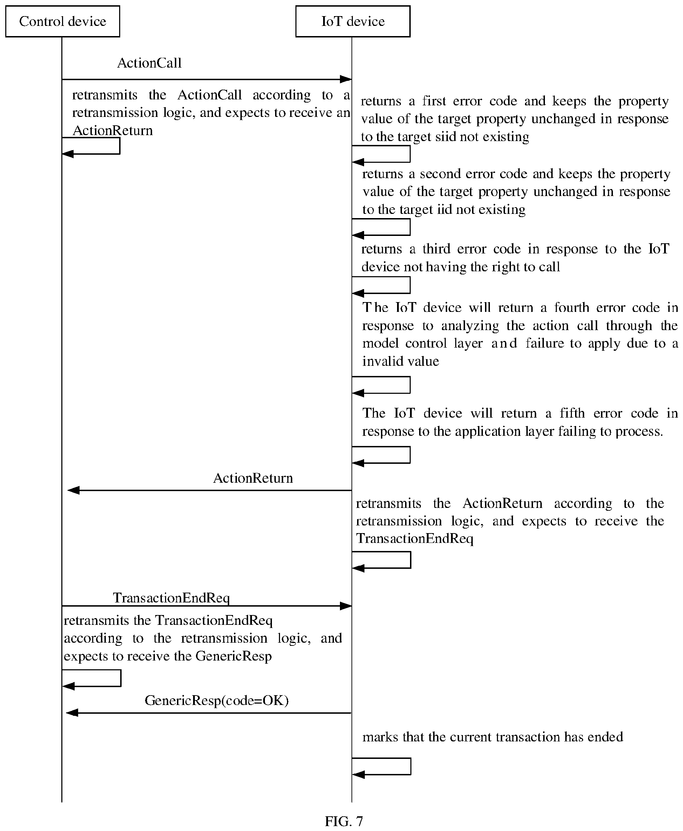

As shown in FIG. 7, the control device sends the action call (ActionCall) to the IoT device, retransmits the action call according to a retransmission logic, and expects to receive an action return (ActionReturn) sent by the IoT device. If other messages are received, it will enter into exception processing.

The IoT device first detects whether the target siid exists after receiving the action call. The IoT device returns a first error code and keeps the property value of the target property unchanged in response to the target siid not existing. The IoT device continues to detect whether the target iid exists in response to the target siid existing. The IoT device returns a second error code and keeps the property value of the target property unchanged in response to the target iid not existing. The IoT device continues to detect whether the IoT device has a right to call the target iid in response to the target iid existing. The action call is analyzed through the model control layer in response to the IoT device having the right to call. The IoT device returns a third error code in response to the IoT device not having the right to call.

When analyzing the action call through the model control layer, the IoT device will return a fourth error code in response to failure to apply due to an invalid value. The IoT device will return a fifth error code in response to the application layer failing to process.

The IoT device sends the action return (ActionReturn) to the control device according to an action result of the action call, retransmits the action return according to the retransmission logic, and expects to receive the transaction end request (TransactionEndReq) sent by the control device. If the IoT device receives other messages, it will enter the exception processing.

The control device sends the transaction end request to the IoT device, retransmits the transaction end request according to the retransmission logic, and expects to receive the transaction end response (GenericResp) sent by the IoT device. If other messages are received, it enters into exception processing.

The IoT device sends the transaction end response (agree to end the transaction, code=OK) to the control device, and marks that the current transaction has ended after receiving the transaction end request.

Generally, when a user controls the IoT device through the control device, the control call received by the control device may not include an explicit property value adjustment amount. For example, when it is necessary to adjust the brightness of the smart table lamp, a voice control call sent by the user is to "turn the lamp on a little", rather than to "increase the brightness of the lamp by 20%". In order to make the operations performed by the IoT device according to the action call meet the user's expectations, when the control call does not explicitly indicate the property value adjustment amount of the target property, the control device first needs to obtain a quantized property value adjustment amount based on the control call, and then determine a target property parameter. Exemplary embodiments are described below.

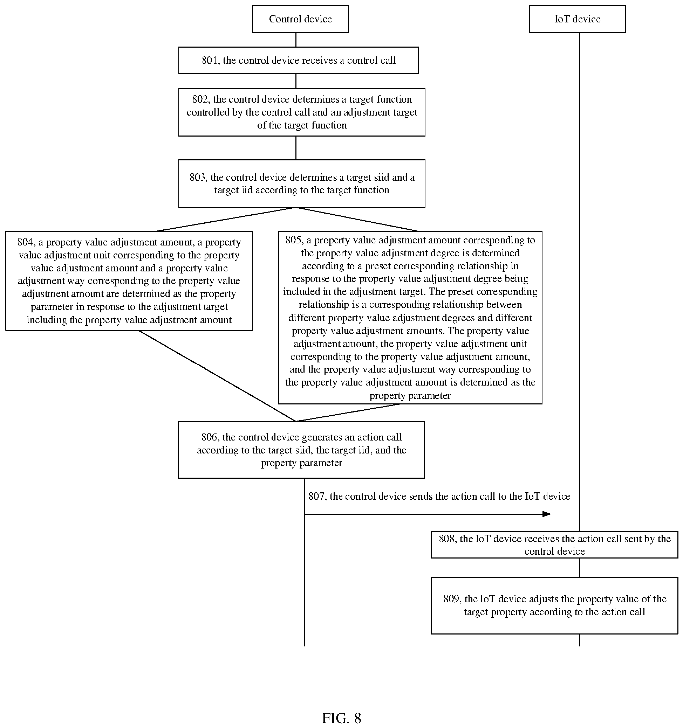

As shown in FIG. 8, FIG. 8 shows a flowchart of a control method of an IoT device provided by another exemplary embodiment of the present disclosure. The embodiment takes the method for the implementation environment shown in FIG. 1 as an example to explain, and the method can include operations at blocks illustrated herein.

At block 801, the control device receives a control call.

Optionally, the control call is triggered by the user through voice, or the control call is triggered by a control on a device control interface (of an IoT application). Embodiments of the present disclosure do not define triggering modes of the control call.

For example, when the IoT device to be controlled can be a smart table lamp, the user can trigger the control call by voice of "turning up the brightness a little", and can also trigger the control call by clicking a brightness increase button.

At block 802, the control device determines a target function controlled by the control call and an adjustment target of the target function.

The control device can support the control of a variety of IoT devices, and in order to achieve accurate control of the IoT devices, in one possible embodiment, the control device first determines the target IoT device controlled by the control call, and further determines the target property to be adjusted in the target IoT device after receiving the control call.

Optionally, when the control call is triggered by the voice, the control device converts the voice control call into a text call and recognizes the text call, and determines a control object according to a recognition result. The control device can recognize the text call through the Natural Language Processing (NLP) model and obtain the recognition result, and then determine the target IoT device according to the recognition result.

Schematically, when the control call is triggered by the voice of "turning up the brightness a little bit", the control device recognizes the voice control call, and determines that the target IoT device is the smart table lamp from a plurality of managed IoT devices according to the recognition result, and further determines that the target property to be adjusted is the brightness value.

Optionally, when the control call is triggered by the control on the device control interface, the control device determines the IoT device corresponding to the device control interface as the target IoT device, and further determines a device property corresponding to the control as the target property.

Schematically, when the control call is triggered by clicking a brightness adjustment control on the smart table lamp control interface, the control device determines the smart table lamp as the target IoT device.

In one possible embodiment, when the control call is triggered by the voice, the control device performs natural language recognition on the control call, and determines the target function and adjusts the target according to a natural language recognition result.

When the control call is triggered by the control, the control device determines an adjustment function corresponding to the control as the target function, and determines the adjustment target according to control operations received by the control. For example, when the control call is triggered by the brightness adjustment button, the control device determines a brightness adjustment function corresponding to the brightness adjustment button as the target function, and determines the adjustment target according to the number of clicks on the brightness adjustment button (for example, clicking the brightness adjustment button once increases the brightness by 10%).

At block 803, the control device determines a target siid and a target iid according to the target function.

In order to make the IoT device know a current service scene, the control device determines the target service instance according to the controlled target function, and obtains the corresponding target siid.

In one possible embodiment, the control device stores a corresponding relationship between the device functions and the device properties in the IoT device. The control device determines the target property corresponding to the target function from the above corresponding relationship according to the target function (the IoT device realizes the target function by adjusting the target property) after determining the controlled target function.

In a schematic embodiment, taking the IoT device as an example, the corresponding relationship between device functions and device properties is shown in Table 1.

**Table 1**

| Device functions | Device properties |
|---|---|
| brightness adjustment function | brightness property |
| color temperature adjustment function | color temperature property |
| switch function | switch property |

Combined with the embodiment in Table 1, the control device determines that the target property to be adjusted is the brightness property in response to determining the target function controlled by the control call is the brightness adjustment function.

The adjustment target of the target function determined through the above operations may include a quantized property value adjustment amount, such as the brightness increase by 10%, the brightness value increase by 10 points, or the like, or may not include the quantized property value adjustment amount, but only include a property value adjustment degree, such as increasing the brightness a little bit, softening the color temperature a little bit or the like. The control device may determine a quantized property parameter by following operations at blocks 804 or 805, depending on whether the adjustment target includes a specific property value adjustment amount.

It should be noted that when the adjustment target includes the target property value, the control device generates a property value setting call according to the target property value, the target iid and the target siid, and sends the property value setting call to the IoT device, and the IoT device is configured to adjust the current property value of the target property to the target property value, without executing a complex adjustment logic.

At block 804, a property value adjustment amount, a property value adjustment unit corresponding to the property value adjustment amount and a property value adjustment way corresponding to the property value adjustment amount are determined as the property parameter in response to the adjustment target including the property value adjustment amount.

Optionally, when the determined adjustment target includes a quantized property value adjustment amount, the control device determines the property value adjustment amount, the property value adjustment unit, and the property value adjustment way as the target property parameter.

Property value adjustment ways are different for different types of adjustment targets. Optionally, the property value adjustment way is positive adjustment in response to the adjustment target being to increase the property value; the property value adjustment way is negative adjustment in response to the adjustment target being to reduce the property value; and the property value adjustment way is inversion adjustment in response to the adjustment target being inverted property value, and the property value adjustment amount is inverted times.

In one schematic example, when the control call indicates to increase the brightness by 20%, the control device determines that the adjustment target includes a property value adjustment amount of "20%", thereby determining the property value adjustment amount of "20%", the property value adjustment unit of "Lumens", and the property value adjustment way of "positive adjustment" as the property parameter.

In another schematic example, when the control call indicates that the smart table lamp is turned off/on, the control device determines that the adjustment target includes the property value adjustment amount "1", thereby determining the property value adjustment amount "1", the property value adjustment unit "times", and the property value adjustment way "inversion adjustment" as the property parameter (The switch control of smart table lamp is realized by an inverted operation of a switch state).

At block 805, a property value adjustment amount corresponding to the property value adjustment degree is determined according to a preset corresponding relationship in response to the property value adjustment degree being included in the adjustment target. The preset corresponding relationship is a corresponding relationship between different property value adjustment degrees and different property value adjustment amounts. The property value adjustment amount, the property value adjustment unit corresponding to the property value adjustment amount, and the property value adjustment way corresponding to the property value adjustment amount is determined as the property parameter.

When the determined adjustment target does not include the quantified property value adjustment amount, but only the property value adjustment degree (usually the control call triggered through the voice only include the property value adjustment degree), the control device needs to first quantify the property value adjustment degree and obtains the property value adjustment amount. The property value adjustment degree includes degree keywords extracted from the control call, such as a little/a bit, slight/somewhat/kind of, a big/substantial, and the like.

For the way of quantifying the property value adjustment degree, in one possible embodiment, the control device stores the corresponding relationship between the property value adjustment degrees and the property value adjustment amounts in advance, and after obtaining the property value adjustment degree, the control device obtains the quantized property value adjustment amount based on the corresponding relationship. In a schematic example, the corresponding relationship between the property value adjustment degrees and the property value adjustment amounts is shown in Table 2.

**Table 2**

| Property value adjustment degrees | Property value adjustment amounts |
|---|---|
| a little/a bit, slight/somewhat/kind of | 10% |
| a big/substantial | 40% |

Combined with the example in Table 2, in a schematic example, the control device receives the voice control call of "increasing the brightness a little bit", determines that the property adjustment degree is "a little bit", and the quantized property value adjustment amount based on the above corresponding relationship is 10%.

The embodiments only describe how the control device quantifies the property value adjustment degree based on preset corresponding relationship. In other possible embodiments, the control device can also quantify the property value adjustment degree through machine learning way or other ways. The embodiments do not limit therein.

In a schematic example, the control device determines the quantized property value adjustment amount of "10%" according to the control call of "increasing the brightness a little bit", thereby determining the property value adjustment amount of "10%", the property value adjustment unit of "Lumens" and the property value adjustment way "positive adjustment" as property parameter.

At block 806, the control device generates an action call according to the target siid, the target iid, and the property parameter.

Of course, in addition to the above parameters, the action call can also include other parameters, such as the indicator bit configured to indicate a type of action call. The embodiments of the present disclosure do not limit the specific parameters included in the action call.

At block 807, the control device sends the action call to the IoT device.

At block 808, the IoT device receives the action call sent by the control device.

At block 809, the IoT device adjusts the property value of the target property according to the action call.

In one possible embodiment, the IoT device determines the target property to be adjusted according to the target siid and the target iid therein after receiving the action call, further obtains the current property value of the target property, and adjusts the property value based on the current property value.

In one schematic example, the IoT device determines that the target property is the brightness property, and obtains a current luminance value of 50, according to the siid "3" and iid "43" included in the action call.

Furthermore, the IoT device analyzes the property parameter, thereby adjusting the current property value corresponding to the property value adjustment unit and the property value adjustment amount according to the property value adjustment way.

The IoT device adjusts the current property value by taking the property value adjustment way as the adjustment direction and the property value adjustment amount as the adjustment step based on the current property value (the property value adjustment amount is directly determined as the adjustment step in response to the property value adjustment unit being consistent with the current property value unit; and the unit conversion is first performed in response to the property value adjustment unit being not consistent with the current property value unit).

In one schematic example, the IoT device determines that the property value adjustment amount is "10%" and the property value adjustment way is "positive adjustment" based on the property parameter "4" included in the analyzed action call, thereby determining the adjustment step is 5 and the brightness value is adjusted from 50 to 55 according to the current brightness value 50.

In another schematic example, the IoT device parsing action call includes the property parameter "5", determines that the property value adjustment amount is "1" and the property value adjustment way is "inversion adjustment", thereby inverting the current switch state "on" once and adjusting the switch state to "off'.

In the embodiments, when the adjustment target determined according to the control call does not include the property value adjustment amount, but the property value adjustment degree, the control device quantifies the property value degree as the property value adjustment amount, and takes the property value adjustment amount as the target property parameter, thereby improving the control accuracy of the IoT device in fuzzy control scenes such as voice control.

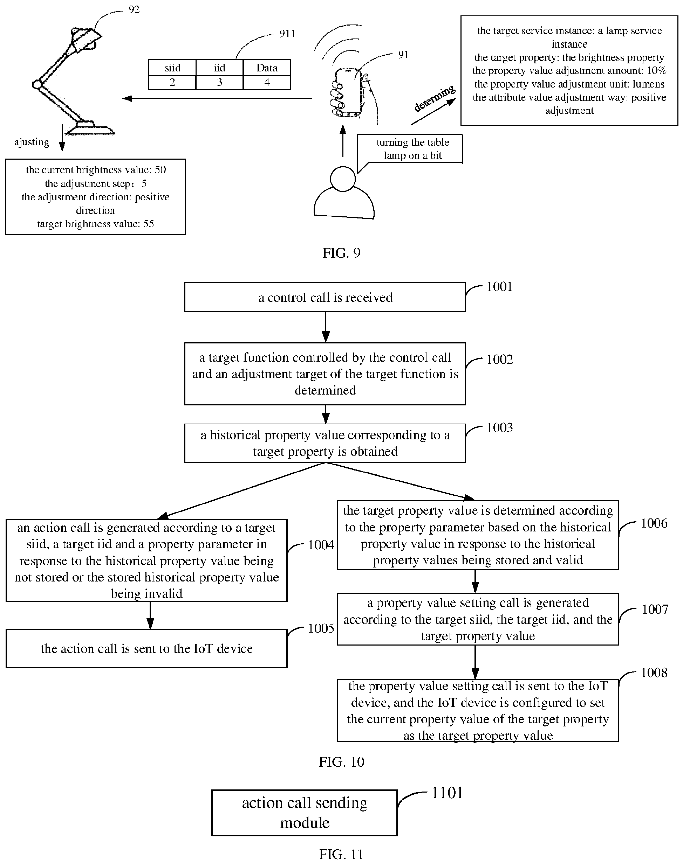

In an actual application scene, as shown in FIG. 9, the user sends a control call to a terminal 91 by a voice of "turning the table lamp on a bit". After receiving the control call, the terminal 91 determines that the target service instance is a lamp service instance, the target property to be adjusted is the brightness property, the property value adjustment amount is 10%, the property value adjustment unit is lumens, and the property value adjustment way is positive adjustment, and generates an action call 911 (including siid=2, iid=3, data=4) according to the determined parameters, and sends the action call 911 to a smart table lamp 92. The smart table lamp 92 will analyze the action call 911 after receiving the action call 911, determines the adjustment step being 5 according to the current brightness value of 50 and the property adjustment amount of 10%, and determines the adjustment direction being positive according to the property value adjustment way, and the current brightness value is adjusted from 50 to the target brightness value of 55.

In some possible application scenes, the control device may receive the control call after obtaining the current device property value of the IoT device. In order to reduce the difficulty in adjusting the property value of the IoT device in this scene (computing power of the IoT device is far lower than computing power of the control device), in one possible embodiment, after receiving the control call, the control device first obtains a historical property value of the target property to be adjusted, and judge whether the historical property value is valid. The control device determines the target property value of the property to be adjusted based on the historical property value and the control call, and sends the action call to the IoT device based on the target property value in response to the historical property value being valid.

Schematically, as shown in FIG. 10, a control device may include operations at blocks illustrated herein when generating and sending an action call.

At block 1001, a control call is received.

At block 1002, a target function controlled by the control call and an adjustment target of the target function is determined.

At block 1003, a historical property value corresponding to a target property is obtained.

During the interaction between the control device and the IoT device, the device state of the IoT device can be obtained. The device state includes the property value of the device property. For example, a switch property, a brightness property, and a color temperature property of the smart table lamp can be obtained when the control device views the device state of the smart table lamp. Optionally, the control device stores a latest state of the IoT device.

In one possible embodiment, after receiving the control call and determining the target property to be adjusted, the control device queries whether the historical property value corresponding to the target property is stored.

Schematically, when it is determined that the target property to be adjusted is the brightness property, the control device queries whether a historical brightness value of the smart table lamp is stored.

In At block 1004, an action call is generated according to a target siid, a target iid and a property parameter in response to the historical property value being not stored or the stored historical property value being invalid.

The control device cannot determine the target property value to be adjusted based on the historical property value, and cannot generate the action call according to the target property and target property parameter, in response to the historical property value of the target property being not stored. The process of generating the action call can be obtained by referring the above embodiments, which will not be repeated here.

Since the IoT device can be controlled by a plurality of control devices at the same time, and can also be controlled by physical keys or a remote control set on the IoT device, when the historical property value of the target property is stored, the control device needs to further detect whether the historical property value is valid. The action call is generated in response to the history property value being invalid.

For the way to determine whether the historical property value is valid, in one possible embodiment, the control device stores acquisition time of the historical property value. The historical property value is determined to be valid in response to a time interval between the acquisition time and the control call receiving time being less than a threshold. The historical property value is determined to be invalid in response to the time interval between the acquisition time and the control call receiving time being greater than the threshold value. For example, the threshold is 30s.

At block 1005, the action call is sent to the IoT device.

Accordingly, the IoT device performs the property value adjustment action according to the action call. This process can be obtained by referring the above embodiments, which will not be repeated here.

At block 1006, the target property value is determined according to the property parameter based on the historical property value in response to the historical property values being stored and valid.

Similarly, when the historical property value is detected to be stored and the historical property value is valid, the control device determines the historical property value as the current property value of the target property, and determines the target property value according to the property parameter based on the current property value. The process of the control device determining the target property value according to the property parameter and the current property value can be obtained by referring to the determination process of the IoT device in the above embodiments, which will not be repeated here.

At block 1007, a property value setting call is generated according to the target siid, the target iid, and the target property value.

Furthermore, in order to reduce the difficulty of property value adjustment of the IoT device, the control device generates the property value setting call so that the IoT device can directly adjust the current property value to the target property value according to the property value setting call.

At block 1008, the property value setting call is sent to the IoT device, and the IoT device is configured to set the current property value of the target property as the target property value.

In the embodiment, after receiving the control call and determining the target property to be adjusted, the control device obtains the historical property value of the target property and judges whether the historical property value is valid. The control call determines the target property value of the property to be adjusted based on the historical property value and the control call in response to the historical property value being valid, and sends the property value setting call to the IoT device based on the target property value, thereby reducing the number of interactions with the IoT device, reducing the difficulty of adjusting the property value of the IoT device, and improving the control efficiency of the IoT device.

It should be noted that in the above embodiments, operations with the control device as an execution subject can be independently implemented as the control method of the IoT device performed by the control device, and operations with the IoT device as an execution subject can be independently implemented as the control method of the IoT device performed by the IoT device. The embodiments will not be repeated here.

It is worth noting that in some scenes, the control device and the IoT device may be completed by a same device that has at least some of the capabilities of the control device and the IoT device, such as a smart speaker. The smart speaker can not only control the functions of the IoT device through voice resolution, but also is the IoT device itself. Under this circumstance, the smart speaker can perform the operations of controlling the control device and the IoT device at the same time.

As shown in FIG. 11, FIG. 11 shows a structure block diagram of a control apparatus for an IoT device provided by an exemplary embodiment of the present disclosure. The control apparatus can be realized as the whole or part of the control device through software, hardware or a combination of both. The control apparatus includes an action call sending module 1101.

The action call sending module 1101 is configured to send an action call to the IoT device. The action call includes a target service instance identification (siid), a target instance identification (iid), and a property parameter.

Optionally, the property parameter includes a property value adjustment amount and a property value adjustment way of the target property.

Optionally, the property parameter also includes at least one of a property value unit and a property value range of the target property.

Optionally, the control apparatus further includes a control call receiving module, a first determination module, a second determination module, a third determination module, and an action call generation module.

The control call receiving module is configured to receives a control call.

The first determination module is configured to determine a target function controlled by the control call and an adjustment target of the target function.

The second determination module is configured to determine the target siid and the target iid according to the target function.

The third determination module is configured to determine the property parameter according to the adjustment target.

The action call generation module is configured to generate the action call according to the target siid, the target iid, and the property parameter.

Optionally, the third determination module includes a first determining unit or a second determining unit.

The first determining unit is configured to determine the property value adjusting amount, a property value adjusting unit corresponding to the property value adjusting amount, and a property value adjusting way corresponding to the property value adjusting amount as the property parameter in response to the adjusting target including the property value adjusting amount.

The second determining unit is configured to determine the property value adjustment amount corresponding to the property value adjustment degree according to a preset corresponding relationship in response to the adjustment target including the property value adjustment degree. The preset corresponding relationship is a corresponding relationship between different property value adjustment degrees and different property value adjustment amounts; and the second determining unit is configured to determine the property value adjustment amount, the property value adjustment unit corresponding to the property value adjustment amount, and the property value adjustment way corresponding to the property value adjustment amount as the property parameter.

Optionally, when the adjustment target is to increase the property value, the property value adjustment way is positive adjustment.

When the adjustment target is to reduce the property value, the property value adjustment way is negative adjustment.

When the adjustment target is to invert the property value, the property value adjustment way is inversion adjustment, and the property value adjustment amount is inverted times.

Optionally, the action call generation module includes a historical property acquisition unit, and an action call generation unit.

The historical property acquisition unit is configured to obtain a historical property value corresponding to the target property.

The action call generation unit is configured to generate the action call according to the target siid, the target iid, and the property parameter in response to the historical property value being not stored or the stored historical property value being invalid.

Optionally, the control apparatus further includes a property value determination module, a setting instruction generation module, and a setting instruction sending module.

The property value determination module is configured to determine the target property value according to the property parameter on the basis of the historical property value in response to the stored historical property value, and the historical property value is valid;

The setting instruction generation module is configured to generate a property value setting call according to the target siid, the target iid, and the target property value.

The setting instruction sending module is configured to send the property value setting call to the IoT device, and the IoT device is configured to set the current property value of the target property as the target property value.

Optionally, the control apparatus further includes a return receiving module, an end request sending module, and an end response receiving module.

The return receiving module is configured to receive an action return sent by the IoT device.

The end request sending module is configured to send a transaction end request to the IoT device according to the action return

The end response receiving module is configured to receive a transaction end response sent by the IoT device.

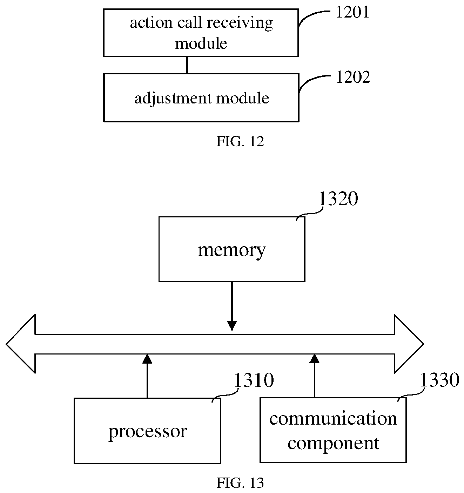

As shown in FIG. 12, FIG. 12 shows a structure block diagram of a control apparatus for an IoT device provided by an exemplary embodiment of the present disclosure. The control apparatus can be realized as a whole or part of the IoT device through software, hardware or a combination of both. The control apparatus includes an action call receiving module 1201 and an adjustment module 1202.

The action call receiving module 1201 is configured to receive an action call sent by a control device, the action call includes a target service instance identification (siid), a target instance identification (iid), and a property parameter.

The adjustment module 1202 is configured to adjust a property value of the target property according to the action call.

Optionally, the property parameter includes a property value adjustment amount and a property value adjustment way of the target property.

Optionally, the property parameter also includes at least one of a property value unit and a property value range of the target property.

Optionally, the adjustment module 1202 is configured to obtain a current property value of the target property according to the target siid and the target iid, and adjust the property value of the target property according to the property parameter based on the current property value.

Optionally, the control apparatus further includes a return module, an end request receiving module and an end response sending module.

The return module is configured to send action return to the control device.

The end request receiving module is configured to receive a transaction end request sent by the control device.

The end response sending module is configured to send a transaction end response to the control device according to the transaction end request.

As shown in FIG. 13, FIG. 13 shows a structural block diagram of an electronic device provided by an exemplary embodiment of the present disclosure. The electronic device can be implemented as the control device or the IoT device in the above embodiments. The electronic device in the present disclosure can include one or more of the following components: a processor 1310 and a memory 1320.

The processor 1310 may include one or more processing cores. The processor 1310 connects various parts of the entire electronic device through various interfaces and wires, and performs various functions and processes data of the electronic device by running or executing instructions, programs, code sets or instruction sets stored in the memory 1320, and calling data stored in the memory 1320. Optionally, the processor 1310 can be implemented in at least one hardware form of digital signal processing (DSP), field programmable gate array (FPGA), and programmable logic array (PLA). The processor 1310 can integrate one or more combinations of a central processing unit (CPU), a graphics processing unit (GPU), a neural network processing unit (NPU) and a modem. The CPU mainly deals with operating a system, a user interface, an application program, and the like. The GPU is configured to render and draw content required to be displayed on a touch screen. The NPU is configured to realize functions of an Artificial Intelligence (AI). The Modem is configured to handle wireless communications. It can be understood that the above modem can also be implemented by a single chip without being integrated into the processor 1310.

The memory 1320 may include a random access memory (RAM) or a read only memory (ROM). Optionally, the memory 1320 includes a non-transitory computer readable storage medium. The memory 1320 may be configured to store instructions, programs, codes, code sets, or instruction sets. The memory 1320 may include a storage program area and a storage data area. The storage program area may store instructions for implementing an operating system, instructions for at least one function (such as touch function, sound playing function, image playing function, and the like), instructions for implementing the following embodiments of methods, and the like. The storage data area can store data (such as audio data, phone book) created according to the use of electronic devices.

The electronic device in the embodiment of the present disclosure also includes a communication component 1330. The communication component 1330 can be a Bluetooth component, a WiFi component, an NFC component, or the like, and is configured to direct or indirect data communicate with the IoT device.

In addition, those skilled in the art can understand that the structure of the electronic device shown in the above drawings does not limit on the electronic device itself, and the electronic device can include more or fewer components than shown in the drawings, or combine some components, or have different component arrangements. For example, the electronic device also includes a radio frequency circuit, an input unit, a sensor, an audio circuit, a loudspeaker, a microphone, a power supply and other components, which will not be described here.

The embodiment of the present disclosure also provides a computer-readable storage medium. The computer-readable storage medium stores at least one instruction for execution by the processor to realize the control method of the IoT device as described in the above embodiments.

The embodiments of the present disclosure provide a computer program product or a computer program. The computer program product or the computer program includes a computer instruction stored in a computer-readable storage medium. The processor of the computer device reads the computer instruction from a computer-readable storage medium, and the processor executes the computer instruction, causing the computer device to execute the control method of the IoT device provided by the above embodiments.

Those skilled in the art should be aware that, in the above one or more embodiments, the functions described in the embodiments of the present disclosure can be implemented in hardware, software, firmware or any combination thereof. When implemented using software, these functions may be stored in a computer-readable medium or transmitted as one or more instructions or codes on the computer-readable medium. The computer-readable medium includes a computer storage medium and a communication medium. The communication medium includes any medium that facilitates the transfer of the computer program from one place to another. The storage medium may be any available medium that can be accessed by a general-purpose or dedicated computer.

The above is only optional embodiments of the present disclosure, and is not intended to limit the present disclosure. Any modification, equivalent replacement, improvement, or the like made within the spirit and principles of the present disclosure shall be included in the scope of the application.

## Claims

1. A control method of an Internet of Things, IoT, device, comprising:
a control device sending an action call to the IoT device, wherein the action call comprises a target service instance identification (siid), a target instance identification, iid, and a property parameter; and
the IoT device adjusting a parameter value of a target parameter according to the action call.

2. The method as claimed in claim 1, wherein the parameter parameter comprises a parameter value adjustment amount and a parameter value adjustment way of the target parameter.

3. The method as claimed in claim 2, wherein the parameter parameter further comprises at least one of a parameter value unit and a parameter value range of the target parameter.

4. The method as claimed in any one of claims 1 to 3, wherein the IoT device adjusting a parameter parameter of a target parameter according to the action call, comprises:
the IoT device obtaining a current parameter value of the target parameter according to the target siid and the target iid; and
the IoT device adjusting the parameter value of the target parameter according to a parameter parameter based on the current parameter value.

5. The method as claimed in any one of claims 1 to 3, wherein after the IoT device adjusting a parameter parameter of a target parameter according to the action call, the method further comprises:
the IoT device sending action return to the control device;
the control device sending a transaction end request to the IoT device according to the action return; and
the IoT device sending a transaction end response to the control device according to the transaction end request.

6. A control method of an Internet of Things, IoT, device, the method being for a control device, and the method being **characterized by** comprising:
sending an action call to the IoT device, wherein the action call comprises a target service instance identification, siid, a target instance identification, iid, and a property parameter.

7. The method as claimed in claim 6, wherein the property parameter comprises a property value adjustment amount and a property value adjustment way of the target property.

8. The method as claimed in claim 6, wherein the property parameter further comprises at least one of a property value unit and a property value range of the target property.

9. The method as claimed in any one of claims 6 to 8, wherein, before the sending an action call to the IoT device, the method further comprises:
receiving a control call;
determining a target function controlled by the control call and an adjustment target of the target function;
determining the target siid and the target iid according to the target function;
determining the property parameter according to the adjustment target; and
generating the action call according to the target siid, the target iid, and the property parameter.

10. The method as claimed in claim 9, wherein the determining the property parameter according to the adjustment target, comprises:
determining a property value adjustment amount, a property value adjustment unit corresponding to the property value adjustment amount, and a property value adjustment way corresponding to the property value adjustment amount as the property parameter in response to the adjustment target comprising the property value adjustment amount;
or,
determining a property value adjustment amount corresponding to a property value adjustment degree according to a preset corresponding relationship in response to the adjustment target comprising the property value adjustment degree, wherein the preset corresponding relationship is a corresponding relationship between different property value adjustment degrees and different property value adjustment amounts; and determining the property value adjustment amount, the property value adjustment unit corresponding to the property value adjustment amount, and the property value adjustment way corresponding to the property value adjustment amount as the property parameter.

11. The method as claimed in claim 10, wherein
the property value adjustment way is positive adjustment in response to the adjustment target being to increase the property value;
the property value adjustment way is negative adjustment in response to the adjustment target being to reduce the property value; and
the property value adjustment way is inversion adjustment, and the property value adjustment amount is inverted times in response to the adjustment target being to invert the property value.

12. The method as claimed in claim 9, wherein the generating the action call according to the target siid, the target iid, and the property parameter, comprises:
obtaining a historical property value corresponding to the target property;
generating the action call according to the target siid, the target iid, and the property parameter in response to the historical property value being not stored or the historical property value being invalid.

13. The method as claimed in claim 12, wherein, after the obtaining a historical property value corresponding to the target property, the method further comprises:
determining a target property value according to the property parameter based on the historical property value in response to the historical property value being stored and valid;
generating a property value setting call according to the target siid, the target iid, and the target property value; and
sending the property value setting call to the IoT device, wherein the IoT device is configured to set a current property value of the target property as the target property value.

14. The method as claimed in any one of claims 6 to 8, wherein, after the sending an action call to the IoT device, the method further comprises:
receiving action return sent by the IoT device;
sending a transaction end request to the IoT device according to the action return; and
receiving a transaction end response sent by the IoT device.

15. A control method of an Internet of Things (IoT) device, the method being for the IoT device, and the method comprising:
receiving an action call sent by a control device, wherein the action call comprises a target service instance identification, siid, a target instance identification, iid, and a property parameter; and
adjusting a property value of a target property according to the action call.

16. The method as claimed in claim 15, wherein the property parameter comprises a property value adjustment amount and a property value adjustment way of the target property.

17. The method as claimed in claim 16, wherein the property parameter further comprises at least one of a property value unit and a property value range of the target property.

18. The method as claimed in any one of claims 15 to 17, wherein the adjusting a property value of a target property according to the action call, comprises:
obtaining a current property value of the target property according to the target siid and the target iid; and
adjusting the property value of the target property according to a property parameter based on the current property value.

19. The method as claimed in any one of claims 15 to 17, wherein after the adjusting a property value of a target property according to the action call, the method further comprises:
sending action return to the control device;
receiving a transaction end request sent by the control device; and
sending a transaction end response to the control device according to the transaction end request.

20. A control apparatus of an Internet of Things, IoT device, the control apparatus being for a control device, and being **characterized by** comprising:
an action call sending module configured to send an action call to the IoT device, wherein the action call comprises a target service instance identification, siid, a target instance identification, iid, and a property parameter.

21. A control apparatus of an Internet of Things, IoT device, the control apparatus being for the IoT device, and comprising:
an action call receiving module configured to receive an action call sent by a control device, wherein the action call comprises a target service instance identification, siid, a target instance identification, iid, and a property parameter; and
an adjustment module configured to adjust a property value of a target property according to the action call.

22. A control device comprising a processor and a memory, wherein the memory stores at least one instruction, the least one instruction is configured to be executed by the processor to realize the control method of the Internet of Things device as claimed in any one of claims 6 to 14.

23. An Internet of Things, IoT, device, comprising a processor and a memory, wherein the memory stores at least one instruction, the at least one instruction is configured to be executed by the processor to realize the control method of the IoT device as claimed in any one of claims 15 to 19.

24. A computer-readable storage medium, wherein the storage medium stores at least one instruction, the at least one instruction is configured to be executed by a processor to realize the control method of an IoT device as claimed in any one of claims 6 to 14, or the control method of an IoT device as claimed in any one of claims 15 to 19.
